# EUROPÄISCHE PATENTSCHRIFT

(11) **EP 1 628 043 B1**
(45) Veröffentlichungstag und Bekanntmachung des Hinweises auf die Patenterteilung: **20.02.2008**
(21) Anmeldenummer: 05014591.1
(22) Anmeldetag: 06.07.2005
(51) Int. Cl.: F16H 25/20

(54) **Zweiteilige, spielarme Spindelmutter**
Anti-backlash nut assembly
Dispositif de rattrapage de jeu

(30) Priorität: 17.08.2004 CH 13542004
(43) Veröffentlichungstag der Anmeldung: 22.02.2006
(73) Patentinhaber: Eichenberger Gewinde AG, 5736 Burg (CH)
(72) Erfinder: Husistein, Kurt, 5736 Burg (CH)
(74) Vertreter: Schaad, Balass, Menzl & Partner AG

(56) Entgegenhaltungen:
- EP-A- 0 640 777
- EP-A- 0 878 642
- US-A- 4 433 590
- US-A- 5 732 596
- PATENT ABSTRACTS OF JAPAN Bd. 013, Nr. 340 (M-857), 31. Juli 1989 (1989-07-31) -& JP 01 116369 A (MITSUBISHI ELECTRIC CORP), 9. Mai 1989 (1989-05-09)
- MAZZI A: "COMPENSATA L'USURA CON CHIOCCIOLE IN PLASTICA" ORGANI DI TRASMISSIONE, TECNICHE NUOVE. MILANO, IT, Bd. 30, Nr. 11, Dezember 1999 (1999-12), Seite 26, XP000883421 ISSN: 0030-4905

## Beschreibung

Die vorliegende Erfindung betrifft eine zweiteilige, spielarme Spindelmutter für ein Schraubgetriebe mit zwei mit dem Aussengewinde der Spindel des Schraubgetriebes zusammenwirkenden mit Innengewindnen versehenen Teilmuttern, wobei die beiden Teilmuttern auf der Spindel durch mindestens eine Feder durch Torsion zueinander gerichtet gespannt sind.

Aus der gattungsgemäßen US-PS 4.433.590 ist eine Spindelmutter der eingangs erwähnten Art bekannt. Bei dieser zweiteiligen Spindelmutter sind die beiden mit Innengewinde versehenen Teilmuttern auf dem Aussengewinde der Spindel durch eine Feder so auf Torsion vorgespannt, dass die Teilmuttern vorgespannt aneinander anliegen. Auf die zylindrischen Oberflächen der Teilmuttern ist die Feder aufgewickelt, wobei die Federdrahtenden an den Teilmuttern befestigt sind. Die Montage dieser Spindelmutter ist mit beträchtlichem Aufwand verbunden. Die Feder ist auf der Oberfläche der Teilmuttern störend, so dass noch eine mit Kosten verbundene Schutzabdeckung erforderlich ist. Die zueinander vorgespannten Teilmuttern gleichen jede Abnützung der Gewinden auf den Spindelmuttern und/oder auf der Spindel aus, so dass im Betrieb am Schraubgetriebe praktisch kein Spiel entstehen dürfte. Die Kraftwirkung der Feder wird allerdings während der Lebensdauer des Schraubgetriebes immer kleiner, weil die Feder sich durch Gewindeabnützung bedingte Streckung entspannt.

Die Aufgabe der vorliegenden Erfindung liegt darin, eine spielarme Spindelmutter der eingangs erwähnten Art zu entwickeln, die eine einfache Herstellung und Montage zulässt, aus einfachen Teilen zusammengesetzt ist, ihre Eigenschaften während der Lebensdauer des Schraubgetriebes nicht verändert, preisgünstig ist und keine störende, vorstehende Teile aufweist.

Die gestellte Aufgabe ist dadurch gelöst, dass die einander zugekehrten Körper der Teilmuttern mit mindestens zwei versetzt gegenüberliegend angeordneten Bohrungen versehen sind und dass in jede der versetzt gegenüberliegend angeordneten Bohrungen eine die Haltebereiche dieser Bohrungen verbindende Schraubenfeder mit quer zu ihrer Längsrichtung wirkender Biegebeanspruchung eingesetzt ist. Bei dieser Spindelmutter sind die beiden Teilmuttern mit achsparallelen Bohrungen einfach herstellbar. In die versetzt gegenüberliegende Bohrungen in den Körpern der Teilmuttern sind quer zu ihrer Längsrichtung gebogene Schraubenfeder eingesteckt, wobei dadurch eine einfache Montage gesichert ist. Unter Haltebereich der Bohrung ist der den Endbereich der Schraubenfeder mit geringem Spiel umgebender Bereich der Bohrung zu verstehen. Hier ist der Endbereich der Schraubenfeder gehalten. Bei Sacklochbohrungen liegt der Haltebereich in der Regel im Bodenbereich der Bohrung. Diese Spindelmutter zeichnet sich durch ihre Einfachheit und Preisgünstigkeit aus. Eine äussere Abdeckung der Spindelmutter ist nicht nötig, denn die Schraubenfeder nach aussen geschützt in den Körpern der Teilmuttern liegen. Die Verwendung von auf quer zu ihrer Längsrichtung liegende Ausbiegung beanspruchten Schraubenfedern für die Vorspannung der Teilmuttern auf Torsion bietet den grossen Vorteil, dass die Kraftwirkung der Schraubenfeder auf die beiden Teilmuttern auf die ganze Lebensdauer des Schraubgetriebes praktisch konstant bleibt. Diese Massnahme führt zu einer verhältnismässig höheren Standzeit des Schraubgetriebes.

Die Schraubenfeder weist im Bereich der Mündungen der Bohrungen vorteilhafterweise einen kleineren Aussendurchmesser auf als die Bohrung selbst. Diese Formgebung der Schraubenfeder erlaubt eine Ausbiegung der Schraubenfeder quer zu ihrer Längsrichtung im Mündungsbereich der Bohrungen.

Die zylindrische Bohrungen können an ihren Mündungen mit die seitliche Ausbiegung der Schraubenfeder quer zu ihrer Längsrichtung zulassenden Ausnehmungen versehen sein. Mit einfachen Mitteln können bei der Herstellung die Mündungsbereiche der Bohrungen mit Ausnehmungen versehen werden. Bei dieser Anordnung kann die Schraubenfeder mit Vorteil in ihrer ganzen Länge eine zylindrische Aussenfläche aufweisen.

Im folgenden werden Ausführungsbeispiele der Erfindung anhand der beiliegenden Zeichnungen näher beschrieben. Es zeigen:
- Fig.1: eine Spindelmutter von der Seite, teilweise im Schnitt
- Fig.2: die Draufsicht auf eine Teilmutter bei entfernter zweiten Teilmutter,
- Fig.3: Teilansichten von zwei Teilmuttern im Schnitt, wie in Fig.1, aber in einem grösseren Masstab,
- Fig.4: Teilansichten von zwei Teilmuttern im Schnitt mit freigestochenen Mündungsbereichen der Bohrungen für die Schraubenfeder.

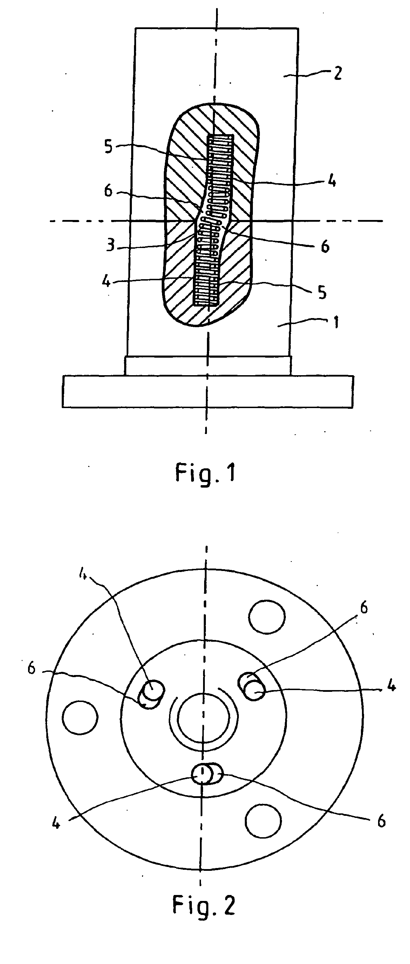

Fig.1 zeigt eine zweiteilige Spindelmutter teilweise im Schnitt. Diese Spindelmutter besteht aus zwei Teilmuttern 1 und 2. Die zweiteilige Spindelmutter ist für ein Schraubgetriebe vorgesehen. Die an sich bekannte, mit Aussengewinde versehene Spindel des Schraubgetriebes ist nicht dargestellt. Die beiden Teilmuttern 1 und 2 sind mit Innengewinden ausgerüstet und so können sie mit der Aussengewinde der nicht dargestellten Spindel zusammenwirken. Die beiden Teilmuttern 1 und 2 sind selbständige Einheiten und beide können bei Drehbewegungen der Spindel daran verschoben werden. Die beiden Teilmuttern 1 und 2 sind aber voneinander nicht unabhängig, sie sind mit mindestens einer Schraubenfeder 3 miteinander verbunden. Die Schraubenfedern 3 bewirken eine Torsionskraft zwischen den beiden Teilmuttern 1 und 2, wobei die Torsion die Teilmuttern 1 und 2 auf der Spindel so dreht, dass sie aneinanderstossen und so jegliche Abnützung an den Gewinden ausgleichen. Dies ist wesentlich, um ein spielarmes Schraubgetriebe zu erhalten.

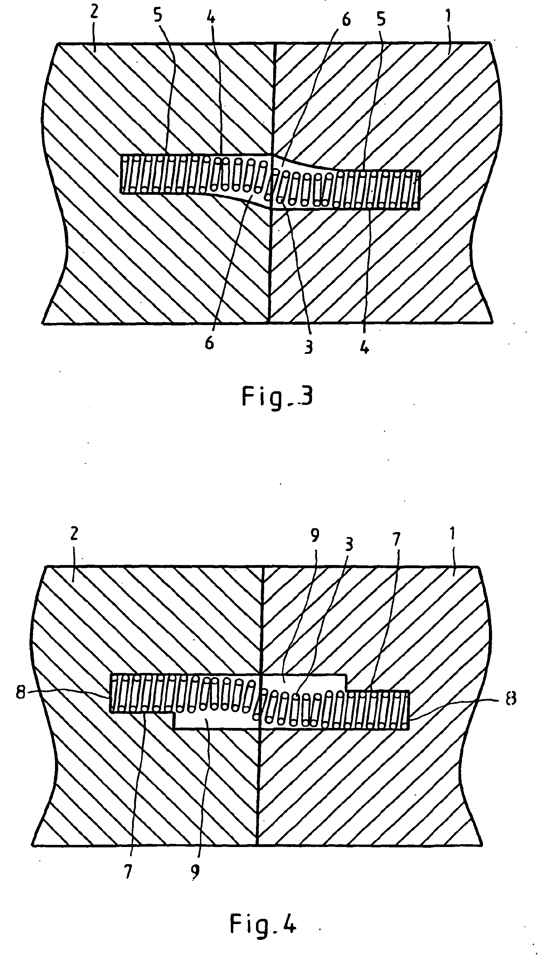

Fig.3 zeigt die gleiche Anordnung wie Fig.1, aber in einem grösseren Masstab, um die Details besser erkennen zu können. Die Schraubenfedern 3 sind, wie auch Fig.1 zeigt in die in den einander gegenüberliegend angebrachten Bohrungen 4 eingesetzt. Die Bohrungen 4 haben in ihren Bodenbereichen Haltebereiche 5, wo die Schraubenfedern 3 mit einem vernachlässigbaren Spiel gehalten sind. Die in den Haltebereichen 5 gehaltenen Schraubenfedern 3 halten die beiden Mutterhälften durch Torsion aneinander, wobei die Schraubenfedern 3 quer zu ihrer Längsrichtung auf Biegung beansprucht sind.

Um die Biegung der Schraubenfedern 3 im Mündungsbereich in der Bohrungen 4 quer zur Längsrichtung der Schraubenfedern 3 sicherzustellen, sind die Aussendurchmesser der Schraubenfedern 3 in diesem Bereich kleiner als der Durchmesser der Bohrungen 4 selbst. Durch diese Massnahme ist genügend Platz geboten für die Biegung der Schraubenfedern 3.

Für die Biegung der Schraubenfedern 3 in Querrichtung wird durch Ausnehmungen 6 in den Mündungsbereichen der Bohrungen 4 genügend Platz geboten. Bei dieser Anordnung können die Schraubenfedern 3 durchgehend einen zylindrischen Aussendurchmesser aufweisen.

Während der Mündungsbereich der Bohrung 4 in der Anordnung nach Fig.1 und 3 einseitig angesenkt ist, zeigt Fig.4 eine weitere Möglichkeit für die Ausbildung des Mündungsbereiches. In dieser Fig.4 liegt der Haltebereich 7 der Bohrung 8 am Boden der Bohrung 8. Der Mündungsbereich ist mit einseitig freigestochenen Ausnehmungen 9 versehen, um für die seitliche Ausbiegung der Schraubenfeder 3 genügend Platz zu bieten.

## Patentansprüche

1. Zweiteilige spielarme Spindelmutter für ein Schraubgetriebe mit zwei mit dem Aussengewinde der Spindel des Schraubgetriebes zusammenwirkenden mit Innengewinden versehenen Teilmuttern (1, 2), wobei die beiden Teilmuttern (1, 2) auf der Spindel durch mindestens eine Feder (3) durch Torsion zueinander gerichtet gespannt sind, **dadurch gekennzeichnet, dass** die einander zugekehrten Körper der Teilmuttern (1, 2) mit mindestens zwei versetzt gegenüberliegend angeordneten Bohrungen (4, 8) versehen sind und dass in jede der versetzt gegenüberliegend angeordneten Bohrungen (4, 8) eine die Haltebereiche (5, 7) dieser Bohrungen (4, 8) verbindende Schraubenfeder (3) mit quer zu ihrer Längsrichtung wirkender Biegebeanspruchung eingesetzt ist.

2. Zweiteilige Spindelmutter nach Anspruch 1, **dadurch gekennzeichnet, dass** die Schraubenfeder (3) im Bereich der Mündungen der Bohrungen (4, 8) eine kleinere Aussendurchmesser aufweist als die Bohrung (4, 8) selbst.

3. Zweiteilige Spindelmutter nach Anspruch 1, **dadurch gekennzeichnet, dass** die zylindrische Bohrungen (4, 8) an ihren Mündungen mit die seitliche Ausbiegung der Schraubenfeder (3) quer zu ihrer Längsrichtung zulassenden Ausnehmungen (6, 9) versehen sind.

4. Zweiteilige Spindelmutter nach Anspruch 3, **dadurch gekennzeichnet, dass** die Schraubenfeder (3) eine zylindrische Aussenfläche aufweist.

## Claims

1. Two-part, low-backlash spindle nut for a screw mechanism having two internally threaded nut parts (1, 2) interacting with the external thread of the spindle of the screw mechanism, the two nut parts (1, 2) on the spindle being torsionally tensioned towards one another by at least one spring (3), **characterized in that** the bodies of the nut parts (1, 2) facing one another are provided with at least two offset opposing bores (4, 8) and that into each of the offset opposing bores (4, 8) a coil spring (3) connecting the holding areas (5, 7) of these bores (4, 8) is inserted with a bending stress acting transversely to its longitudinal direction.

2. Two-part spindle nut according to Claim 1, **characterized in that** the coil spring (3), in the area of the orifices of the bores (4, 8), has a smaller outside diameter than the bore (4, 8) itself.

3. Two-part spindle nut according to Claim 1, **characterized in that** the cylindrical bores (4, 8), at their orifices, are provided with recesses (6, 9) allowing lateral deflection of the coil spring (3) transversely to its longitudinal direction.

4. Two-part spindle nut according to Claim 3, **characterized in that** the coil spring (3) has a cylindrical external surface.

## Revendications

1. Ecrou de broche à faible jeu en deux parties pour une transmission à vis, comprenant deux écrous partiels (1, 2) coopérant avec le filetage externe de la broche de la transmission à vis et pourvus de filetage internes, les deux écrous partiels (1, 2) étant serrés l'un vers l'autre par torsion sur la broche par au moins un ressort (3), **caractérisé en ce que** les corps tournés l'un vers l'autre des écrous partiels (1, 2) sont pourvus d'au moins deux alésages (4, 8) disposés l'un en face de l'autre de manière décalée, et **en ce que** dans chacun des alésages (4, 8) disposés l'un en face de l'autre de manière décalée est inséré un ressort à boudin (3) reliant les zones de fixation (5, 7) de ces alésages (4, 8), avec une contrainte de flexion agissant transversalement à leur orientation longitudinale.

2. Ecrou de broche en deux parties selon la revendication 1, **caractérisé en ce que** le ressort à boudin (3) présente dans la région des embouchures des alésages (4, 8) un diamètre extérieur plus petit que l'alésage (4, 8) lui-même.

3. Ecrou de broche en deux parties selon la revendication 1, **caractérisé en ce que** les alésages cylindriques (4, 8) sont pourvus au niveau de leurs embouchures d'évidements (6, 9) permettant la flexion latérale du ressort à boudin (3) transversale à son orientation longitudinale.

4. Ecrou de broche en deux parties selon la revendication 3, **caractérisé en ce que** le ressort à boudin (3) présente une surface extérieure cylindrique.
